# EUROPEAN PATENT APPLICATION

(11) **EP 1 505 767 A1**
(43) Date of publication of application: **09.02.2005**
(21) Application number: 03017896.6
(22) Date of filing: 05.08.2003
(51) Int. Cl.: H04L 12/24

(54) **Network management system with network management software installed to network interface card**

(71) Applicant: Xnet Technology Corporation, San-Chung City, Taipei (TW)
(72) Inventor: Kao, Szu Yuan, San-chung City Taipei (TW); Huang, Yu Ching, San-chung City Taipei (TW)
(74) Representative: Zeitler, Giselher

(57) **Abstract**

A network management system by using network interface cards installed with network management software comprises a main control device in a network; a network main control software being installed to the main control device; and a plurality of information devices connected to the main control device through the network; each of the information device being installed with one of the network interface cards; a driver of the network interface card being installed with a network management software corresponding to the network main control software.

## Description

### FIELD OF THE INVENTION

The present invention relates to network management, and particularly to a network management system with network management software installed to network interface card. The network interface card is installed to an information device in the network. The network management software collects data about the information device through the network interface card.

### BACKGROUND OF THE INVENTION

In current network management system, the network management software is installed in an agent and then the agent is installed to a computer. The data for network management is provided by the agent. Then the data is sent to a console for management. However in this prior art, the network management software is installed to the agent manually. Many setting operations must be performed for actuating the network management software. These operations cannot generally be installed by those not skilled in the art. Thereby, it must be performed by skilled workers and thus the installation operation is inconvenient.

Moreover, current network management software has only finite functions which can not meet current requirements.

### SUMMARY OF THE INVENTION

Accordingly, the primary object of the present invention is to provide a network interface card installed with network management software; the network interface card being installed to an information device; the network management software collecting data about the information device through the network interface card.

Another object of the present invention is to provide a network management system by using network interface cards installed with network management software which comprises a main control device in a network; a network main control software being installed to the main control device; and a plurality of information devices connected to the main control device through the network; each of the information device being installed with one of the network interface cards; a driver of the network interface card being installed with a network management software corresponding to the network main control software.

The various objects and advantages of the present invention will be more readily understood from the following detailed description when read in conjunction with the appended drawing.

### BRIEF DESCRIPTION OF THE DRAWINGS

Fig. 1 shows the structure of the network management system of the present invention.
Fig. 2 shows the software structure of the main control device of the present invention.
Fig. 3 shows the structure of the information device according to the present invention.

### DETAILED DESCRIPTION OF THE PREFERRED EMBODIMENTS

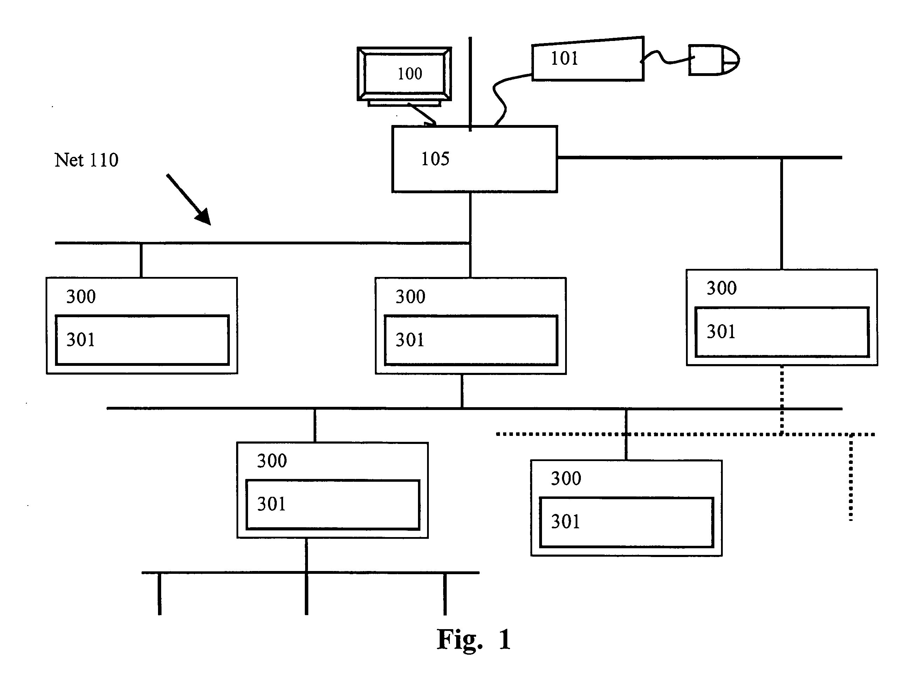

Referring to Figs. 1, the structure of the network management system of the present invention is illustrated. The present invention includes a main control device 105 and a plurality of information devices 300. These information devices 106 are connected to the main control device 105 through a network 110. The main control device 105 includes a monitor 100, a keyboard 101, and other computer peripherals. The information devices may be personal computes, notebook computers, servers, handsets with information process ability, etc. The main control device 105 may be any information processing device and at any nodes in the network. It is only necessary that the information devices 300 can send data to the main control device 105.

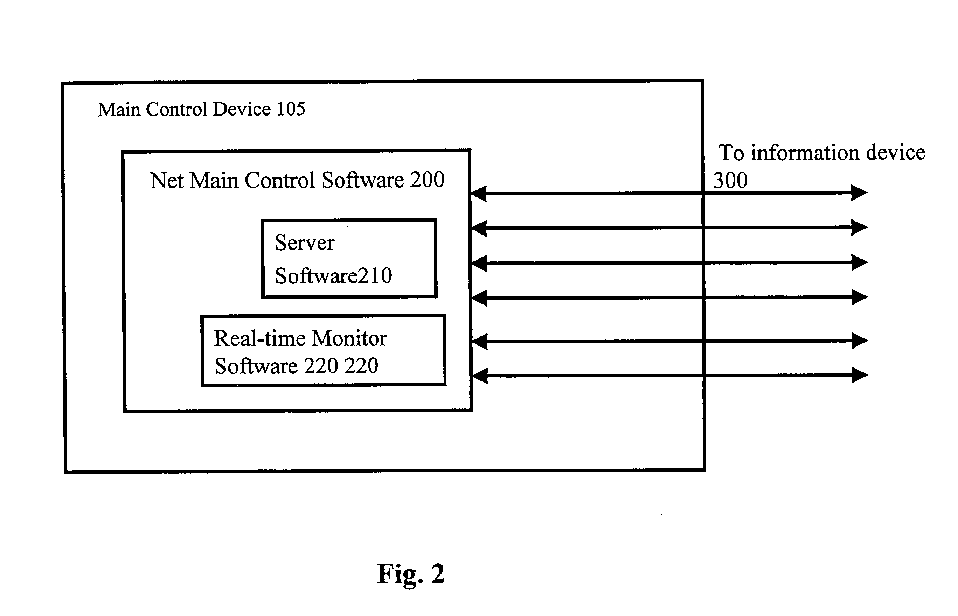

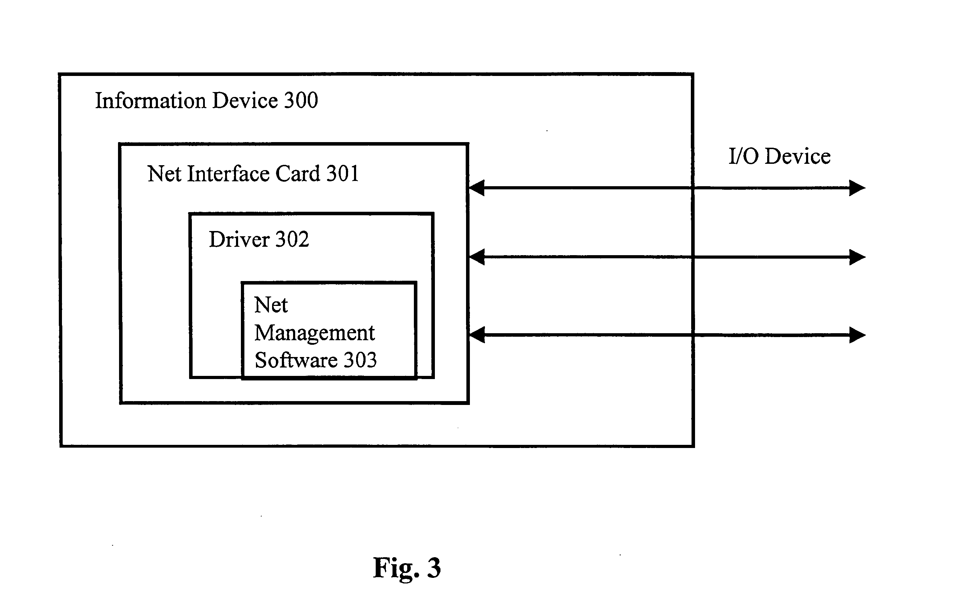

Referring to Figs. 2 and 3, the software structure of main control device 105 of the present invention is illustrated in Fig. 2 and the structure of the information device 300. The main control device 105 is installed to the network main control software 200 of the present invention. Each information device 300 is installed with the network interface card 301 of the present invention. In the present invention, the network management software 303 is arranged in the network interface card 301. After installing the network interface card 301, the network management software 303 will be installed automatically without any setting and installing operation. In the present invention, the information collected in the network management software 303 includes for example data flow, numbers of packets, TCTIP data amount, etc. These traffic can be collected by the network management software of the present invention.

The data collected by the network management software 303 is sent to a network main control software 200 for further processing.

The network main control software 200 can monitor the network use state of a plurality of computer in an area network through a standard SNMP(Simple Net-Management Protocol) and sets alarm conditions. When an alarm condition is matched, alarm is emitted by trumpets or email. Moreover, network main control software 200 can monitor the states of computer software so as to prevent non-allowed software being installed.

The network main control software 200 includes a real-time monitor software 220 and a server software 210. The server software 210 of the network main control software 200 serves for collecting history data about the use of the network. It is installed only at one computer, i.e., the main control device 105. The main control device 105 collects the history data about use of the networks of all the information devices 300 and the states of software installation. The real-time monitor software 220 serves to collect the information about use of the network real-time. The real-time monitor software 220 can display the use of the network of an information device 300 monitored and emits alarm according to set states. If history information is to be displayed, then it is used with the server software 210 of the network main control software 200.

In the same office, the network management console will search network computer terminals with the real-time monitor software 220 and group the terminals according to the system functions for simulating the network structure.

The network main control software 200 serves for receiving network transfer data and getting statistic information for emitting alarm; monitoring the copyright of the software used in the network; updating and dispatching computer software; window software dispatch in network environment, and managing network management information (SNMP, RMON) about the network management hardware, etc.

The network main control software 200 provides the following network use information about the monitor computers through SNMP network management protocol.

SNMP related information: including system related information, for example, edition of CPU, edition of operation system; MAC address of the network card, etc.

Interface related information: including 8 bit interface input information, 8 bit interface output information, errors about the interface information, deleting of the interface information, and protection of unknown interface information;

IP related information: including receiving of IP information; transmission of IP information; address error of IP information; hard disk condition of IP information;

TCP relates information: including sectioning of TCP information; sectioning of TCP output; and TCP information errors;

UDP related information: including udpInDatagrams ' udpOutDatagrams ' udpInErrors;

ICMP related information: including icmpInMsgs, icmpInEchos, icmpEchoReps, icmpInErrors;

RMON related information: including statistic related information; application information; packet related information (including packet propagation and broadcasting); and length of packet.

Error information: including CRC align packets, length insufficient packets; over length packets; sectioning messages; collision of packets; Jabbers.

History related information: including application information; packet related information (including packet propagation and broadcasting); CRC align packets, length insufficient packets; over-length packets; sectioning messages; collision of packets; Jabbers.

### Operation of the server software 210 of network main control software 200:

The server software 210 of the network main control software 200 can perform the following operations:
1. Setting a device list for the computers to be monitored: after the server software 210 of the network main control software 200 is actuated, an operation window will display. The user uses a Discover function to set computers to be monitored. The IP address of the area network will be inputted to a dialogue box of the display screen. Then the computers to the monitored is searched. If the program searches the computer to be monitored, then the IP and MAC addresses of this computer will be recorded.
2. Set a legal software list: the software installed in the computer is listed.
3. Actuate server software 210 of the network main control software 200: After complete the setting, a selection of reducing the size of the window is done, then the server software 210 of the network main control software 200 will be installed to the system for collecting history data of the computer monitored.
4. Retain history data in a time period: in the present invention, the server software 210 of the network main control software 200 retains all the network history data in a set time period.

### Operations about the real-time monitor software 220 of the network main control software 200

The real-time monitor software 220 of the network main control software 200 has the functions of design and start. The computer to be monitored is set under the design mode. The mode of the program can be determined by a tool list in the window. The operation of the real-time monitor software 220 includes the following items:
1. Set groups of the computers monitored:
   The real-time monitor software 220 of the network main control software 200 can group the computers monitored according to the defaults and perform the group edition function.
2. Search the computer monitored and started in the network:
   For the started and monitored computers in the network, the discover function is performed. The searched computers will group according to the setting of group edition.
3. The real-time monitor software 220 of the network main control software 200 browsers the traffic of the network:
   Under start mode, any computer or computer group in the dialogue box is clicked. Then the data items to be monitored is displayed at a lower side of the dialogue box. If any item is selected, the program frame will display the related data of this item.
4. Set conditions of alarming:
   A mouse is used to click an item, then a condition set window is displayed. Thereby, the user can set threshold of alarm for the item.
5. Acknowledge of an alarm:
   If abnormal condition occurs, the real-time monitor software 220 of the network main control software 200 will emit alarm to inform the user until the system returns to a normal condition or the user gives an acknowledge.
6. Alarm list:
   When an alarm emits, an alarm list function is used so as to list all alarms.
7. Event list:
   The real-time monitor software 220 of the network main control software 200 records all events and an event list serves to list all the events for being checked by the user.
8. History data check:
   If a computer has installed with the real-time monitor software 220 of the network main control software 200, it is only necessary to perform a history function in the group manage tool. Then a dialogue box about history data inquiry under a selection date and items appears.
9. Search for illegal software;
   If the real-time monitor software 220 of the network main control software 200 has been installed, then the DMI monitor item of the monitored computers is selected. If the computer has any illegal software, then it will be displayed.

The network main control software of the present invention can be loaded .through agencies, or networks or disks.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A network management system by using network interface cards installed with network management software comprising:
a main control device installed in a network; a network main control software being installed to the main control device; and
a plurality of information devices connected to the main control device through the network; each of the information device being installed with one of the network interface cards; a driver of the network interface card being installed with a network management software corresponding to the network main control software.

2. The network management system as claimed in claim 1, wherein after installing the network interface card, the network management software will be installed automatically without any setting and installing operation.

3. The network management system as claimed in claim 1, wherein the information collected in the network management software includes data flow, numbers of packets, TCTIP data amount.

4. The network management system as claimed in claim 1, wherein data collected by the network management software is sent to the network main control software for further processing.

5. The network management system as claimed in claim 1, wherein the network main control software monitors a plurality of computers about the state of using the network of each computer through a standard SNMP(Simple Net-Management Protocol).

6. The network management system as claimed in claim 1, wherein the network main control software sets alarm conditions; when an alarm condition is matched, alarm is emitted.

7. The network management system as claimed in claim 1, wherein the network main control software includes
a server software for collecting history data about the use of the network; wherein the server software is installed at the main control device; the main control device collects history data about use of the networks of all the information devices and the states of software installation;
a real-time monitor software for collecting the information about use of the network real-time; wherein the real-time monitor software displays the use of the network of an information device monitored and emits alarm according to set states; if history information is to be displayed, then it is used with the server software of the network main control software.

8. The network management system as claimed in claim 1, wherein the network main control software serves for receiving network transfer data and getting statistic information for emitting alarm; monitoring the copyright of the software used in the network; updating and dispatching computer software; performing window software dispatch in network environment, and managing network management information about the network management hardware.

9. The network management system as claimed in claim 1, wherein the network main control software provides the following network use information about the monitor computers through SNMP network management protocol; the network use information includes SNMP related information; interface related information; IP related information; TCP relates information; UDP related information; RMON related information; error related information.

10. The network management system as claimed in claim 7, wherein the server software of the network main control software performs the following operations: setting a device list for the computers to be monitored; setting a legal software list; actuating server software of the network main control software; retaining history data in a set time period.

11. The network management system as claimed in claim 7, wherein the real-time monitor software of the network main control software has the functions of design and start; a computer to be monitored is set under the design mode.
